# EUROPEAN PATENT SPECIFICATION

(11) **EP 1 389 047 B1**
(45) Date of publication and mention of the grant of the patent: **08.07.2009**
(21) Application number: 02729047.7
(22) Date of filing: 30.04.2002
(51) Int. Cl.: A23F 3/16, A23F 3/40

(54) **METHOD FOR DELIVERING FRESH FLAVOR IN AN ON-PREMISE BEVERAGE**
METHODE FUER DEN ZUSATZ VON FRISCHEM AROMA ZU EINEM AUF DER STELLE ZUBEREITETEN GETRAENK
PROCEDE VISANT A DISPENSER UN AROME FRAIS A UNE BOISSON SUR UN POINT DE VENTE

(30) Priority: 30.04.2001 US 287436 P
(43) Date of publication of application: 18.02.2004
(73) Proprietor: Pepsi/Lipton Tea Partnership, Purchases, NY 10577 (US)
(72) Inventor: DA CUNHA, Kathleen, Ridgefield, CT 06877 (US); BELL, Zena, Hartsdale, NY 10530 (US); HIRS, Rein, Mahopac, NY 10541 (US); TOBIN, John, Hillsdale, NJ 07642 (US); QI-ZHENG, June, Hackensack, NJ 07601 (US); LEHMBERG, Gregg, Westfield, NJ 07090 (US)
(74) Representative: Copsey, Timothy Graham
(86) International application number: PCT/US2002/013433
(87) International publication number: WO 2002/087350

(56) References cited:
- WO-A-00/47058
- WO-A-00/57713
- WO-A-01/12033
- US-A- 3 966 986
- US-A- 5 676 041
- US-A- 5 952 032
- US-B1- 6 182 555

## Description

### BACKGROUND OF THE INVENTION

### Field of the Invention

The present invention relates to a method of delivering fresh flavor to an on-premise beverage at the point of dispense. More particularly, the present invention relates to a method in which flavor compounds are incorporated in a separate component and then the separated flavor component is mixed with other beverage components at the time of dispense. The invention specifically relates to a method in which tea flavor compounds are incorporated in a separate sweetener component and then the tea flavor/sweetener component is mixed with other iced tea beverage components at the time of dispense.

### Related Background Art

Tea, *Camellia sinensis*, originated in China around 220 B.C. and is enjoyed worldwide due to its unique aromatic flavor (aroma) and astringent taste. Tea is traditionally consumed as leaf (green, oolong or black) infused with hot water, either in loose form or in the form of a tea bag. As an alternative to fresh brewing, tea is also consumed in the form of instant tea powder which may be mixed with sugar, citric acid and natural flavors and reconstituted with water. Instant tea, however, while very convenient to use, is generally perceived as a lower quality tea than that brewed directly from the leaf.

Therefore, in restaurants, cafeterias, office coffee services, sports venues and the like, i.e., "on-premise", tea leaf is generally brewed using various brewers to prepare fresh brewed iced tea beverages. However, the consistency and microbiological stability of such brewed tea are of great concern. As a result, a very concentrated tea extract which delivers iced tea more conveniently than brewing from tea leaf, which delivers the brewed tea character not attainable from powdered tea and which regularly produces a consistent, safe iced tea beverage, has been developed. The concentrate contains tea extract, colors, flavors, preservatives and acid and is diluted about 100-fold by dispensing equipment which has been specifically designed for reconstituting this tea concentrate to prepare an iced tea beverage on-premise. What is more, since fresh brewed tea is usually consumed sweetened, the dispensing equipment also allows for the addition of a liquid sweetener in a range of desired levels into the tea beverage. U.S. Patent Application No. 09/965,829 and U.S. Design Application No. 29/127,979 filed October 1, 2001, and August 16, 2000, respectively, as well as WO 0 047 058, relate to the dispensing equipment mentioned above.

The above-mentioned tea concentrate is made via tea processing. In general, tea processing refers to a process of treating or extracting tea leaf to obtain maximum yield of tea solids with minimum negative change to the tea flavor/character. Tea solids refer to the dry matter of a tea extract of which the largest class of compounds comprises polyphenols. Tea processing typically consists of five steps, namely extraction, aroma stripping, de-creaming, concentration and spray drying. The above-mentioned concentrated tea extract is prepared by extracting, de-creaming and concentrating tea solids. U.S. Patent Application Nos. 09/501,172, 09/500,850 and 09/500,895, all filed on February 9, 2000, relate to the above-described tea extract.

After selecting the raw leaf material, tea is extracted with water by percolation or countercurrent extraction. After extraction, a de-creaming step takes place in order to remove insoluble materials that form in tea extract upon cooling; tea extract is typically cooled and centrifuged in order to remove the insoluble material, which would otherwise be responsible for cloudiness or haze in the final beverage upon reconstitution. The de-creamed extract is then concentrated by evaporation under vacuum to produce a tea concentrate usually at 20% to 75% tea solids or higher. Additional concentration steps such as reverse osmosis and freeze drying may also or may alternatively be used. Tea processing steps and manufacture are described in detail in "Tea and Soluble Tea Products Manufacture" by Nicholas Pintauro (Noyes Data Corporation, Park Ridge, NJ, 1977).

The above-mentioned tea concentrate is stabilized and preserved and can be used in the dispensing equipment mentioned above to prepare iced tea beverages on-premise. However, the present inventors have discovered that this tea concentrate fails to deliver the volatile, aromatic compounds necessary to deliver fresh brewed tea taste beyond approximately 3-5 days.

These volatile, aromatic compounds, collectively referred to as tea aroma, are essential to tea quality and flavor. The composition of tea aroma is rather complex, consisting of approximately 500-650 compounds including hydrocarbons, aldehydes, alcohols, esters, ketones, lactones, phenols, acids and nitrogen- and sulfur-containing compounds. A complete list of tea aroma compounds discovered to date is set forth in "TEA, Cultivation to Consumption", Wilson and Clifford, Chapman Hall, London (1992). Scientists have found it difficult to identify specific key compounds that characterize tea aroma, and it is believed that even compounds present at very small quantities may play a key role in tea aroma.

US 3966986 describes a method for enhancing the flavour and aroma of a tea beverage prepared from a soluble tea, e.g. a concentrated tea extract or a dried soluble tea, by adding a flavouring agent to the soluble tea to produce a final tea beverage containing about 0.01-25ppm of the added flavouring agent.

US 5676041 describes a coffee brewing apparatus which includes a means for grinding virgin coffee beans, a means for dispensing a flavouring onto the virgin coffee beans after they have been ground and means for brewing the flavoured coffee beans, the means for grinding, the means for dispensing and the means for brewing being unitary with said coffee brewing apparatus. A method of brewing a flavoured coffee in a brewing apparatus is also described.

The present inventors have discovered that certain critical chemical components of tea aroma and tea flavors, in particular, the aldehydes, are unstable in the presence of concentrated tea solids. Therefore, these components degrade rapidly in the above-mentioned tea concentrate. The exact degradation mechanism is not known; however, aldehydes have been shown analytically to degrade by more than 90% of the original value within one week.

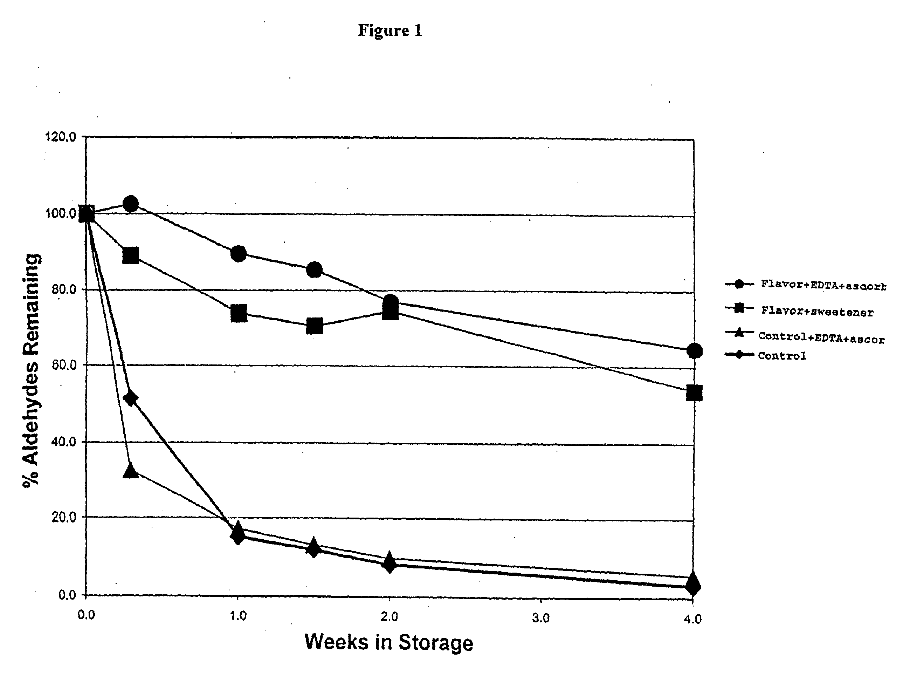

Figure 1 illustrates the degradation curves for four samples. The first sample is a control which contains both tea solids and tea flavors. The second sample is identical to the first sample except insofar as it additionally contains EDTA and ascorbic acid, which are well known stabilizers or anti-oxidants. The third sample contains only sweetener and tea flavors. The fourth sample is identical to the third sample except insofar as it additionally contains EDTA and ascorbic acid. It is clear from Figure 1 that the aldehydes which in part constitute tea flavor or tea aroma degrade rapidly in the presence of tea solids, regardless of whether a stabilizer is used. On the other hand, the aldehydes are relatively stable when stored only with a sweetener, regardless of whether a stabilizer is used.

Therefore, a tea concentrate, which contains both tea solids and tea flavor or tea aroma, has a shelf life of only several days to a week before it fails to deliver fresh brewed taste when reconstituted with water and sweetener. Such a short shelf life is not acceptable for a product that is intended for use as a method for conveniently preparing iced tea beverages with fresh brewed tea taste for on-premise accounts.

### Brief Description of the Drawings

Figure 1 illustrates degradation curves for aldehydes in the presence and in the absence of tea solids and/or stabilizers.
Figure 2 illustrates the stability of flavor compounds over time when mixed with liquid sucrose.

### Summary of the Invention

The present invention is directed to a method of delivering fresh brewed tea taste to an on-premise iced tea beverage at a point of dispense comprising the steps of: (a) providing tea flavor compounds in an amount sufficient to deliver fresh brewed tea taste separate from tea solids prior to the time of dispense; and (b) mixing the tea flavor compounds with the tea solids at the time of dispense, wherein the tea flavour compounds are provided in an amount of 0.01 to 12% by weight of finished iced tea beverage.

In certain preferred embodiments of the invention, the tea flavor compounds are tea flavor, tea aroma or both tea flavor and tea aroma. In additional preferred embodiments, the tea flavor compounds are provided in an amount of 0.02 to 5%, and most preferably 0.03 to 2% by weight of finished iced tea beverage. In still additional preferred embodiments of the present invention, the tea flavor compounds are provided in an amount from 1 to 150%, more preferably 5 to 90%, and most preferably 15 to 50% of an amount of tea solids in a finished iced tea beverage.

### Detailed Description of the Invention

The present invention solves the problem associated with the degradation of unstable flavor components in the presence of other beverage ingredients, e.g., the degradation of tea aroma or tea flavor in a tea concentrate which contains tea solids. According to the present invention, flavor compounds are incorporated in a separate component and then the separated flavor component is mixed with other beverage components at the time of dispense. It is important to note that the present invention is generally applicable to all on-premise beverages. Any unstable component may be delivered separately, e.g., via a 18.9-litre (5-gallon) bag suitable for use in certain dispensers, and then fresh dosed at the point of dispense into a given beverage. The unstable component may be delivered alone or with some other component(s) with which it exhibits stability.

The present inventors have found this concept particularly suited for use with on-premise iced tea beverages. More particularly, the critical chemical components of tea aroma or tea flavor, i.e., aldehydes, are combined with a sweetener and are simultaneously dispensed with the sweetener upon dispense of the iced tea beverage on-premise. Because the flavor components are stable in a typical sweetener system, both a desired amount of sweetness and a constant level of flavor are achieved.

As used herein, "tea aroma" refers collectively to the large group of naturally occurring, volatile, aromatic compounds essential to tea quality and flavor and are sourced directly from the leaf or the extract thereof. As used herein, "tea flavors" refers to artificially-made or naturally sourced compounds that are combined in certain ratios to simulate tea taste. As used herein, "tea flavor compounds" refers to tea aroma or a component thereof, tea flavor or a component thereof or a combination thereof. As used herein, "on-premise" refers to all locations where food or beverage is consumed out of the home such as restaurants, cafeterias, office coffee services and sports venues.

Sweeteners suitable for use in any embodiment of the present invention include any and all sweeteners typically used to sweeten beverages. Such sweeteners include, without limitation, sucrose, high fructose corn syrup, corn syrup, honey and molasses. Any other nutritive or artificial sweetener may also be used in the present invention.

Typically, a sweetener for use in the present invention takes the form of a solution contained in a bag or the like which is capable of being loaded in or hooked up remotely to a given dispenser and being dispensed simultaneously with other beverage components. The bag or the like may take any suitable form or any suitable size, typically a 11.4 or 18.9 litre (3- or 5-gallon) bag. Such a sweetener is also typically acidified and preserved.

Any food grade acid or combination of food grade acids which lowers the pH of the sweetener to about 4.6 or below, the pH required for pathogen stability, can be used in the present invention. Suitable acids include, without limitation, phosphoric acid, citric acid, lactic acid, fumaric acid and combinations thereof.

Likewise, any preservative typically used in food or beverage applications can be used in the present invention to preserve the sweetener system. Suitable preservatives include, without limitation, benzoate, sorbate and combinations thereof.

One of ordinary skill in this art will readily appreciate that the acidification and preservation of the sweetener component may be unnecessary if certain other measures are taken. For example, the sweetener component may be aseptically packed or frozen, thereby obviating the need for acidification and preservation.

According to the preferred embodiment of the present invention, tea flavor or tea aroma is provided in a sweetener at a level to provide appropriate flavor character and strength to a finished tea beverage. To provide a well balanced characteristic flavor/taste profile, these compounds should be delivered within a certain ratio relative to the tea solids present in the concentrated tea extract. The tea aroma or tea flavor is typically dosed into the sweetener to deliver levels in the finished beverage in the range of 1-150%, preferably in the range of 5-90%, and most preferably in the range of 15-50% of the tea solids level.

It is important to note that both tea aroma and tea flavor exhibit instability in the presence of tea solids. Accordingly, the present invention contemplates the provision of either or both of tea aroma and tea flavor in the sweetener system in an amount appropriate to deliver fresh brewed tea taste.

Tea aroma suitable for inclusion with the sweetener component according to the present invention may be obtained during the initial tea processing, i.e., through aroma stripping, etc. Any tea flavor is suitable for inclusion in the sweetener component according to the present invention. These tea flavors may be natural or artificial (engineered from compounds not derived naturally from tea) or a combination thereof. Suitable tea flavors include any of those flavors currently available from a number of "flavor houses" such as Firmenich Inc. (Princeton, NJ), Virginia Dare (Brooklyn, NY), Takasago (Rockleigh, NJ), Quest International (Hoffman Estates, IL), Harmann & Reimer, Teterboro, NJ) and Givaudan Roure (Cincinnati, OH).

Based on individual taste preferences, the level to which an iced tea beverage may be sweetened will vary considerably. Typically, however, a beverage may be sweetened in the range of 2-25% sugar and more preferably in the range of 5-15% sugar. Actual levels of the flavor/aroma compounds in the sweetener typically range from 0.01-12% based on finished beverage, preferably in the range from 0.02-5%, and most preferably from 0.03-2%, depending on the concentration of the sweetener. It is also important to note that the tea aroma/flavor may be separately provided, i.e., without a sweetener for an unsweetened beverage, for recombination with other beverage components at the point of dispense. For example, the tea flavor/aroma may be diluted in a media free from sweetener.

### Stability of Flavor Compounds in Sucrose

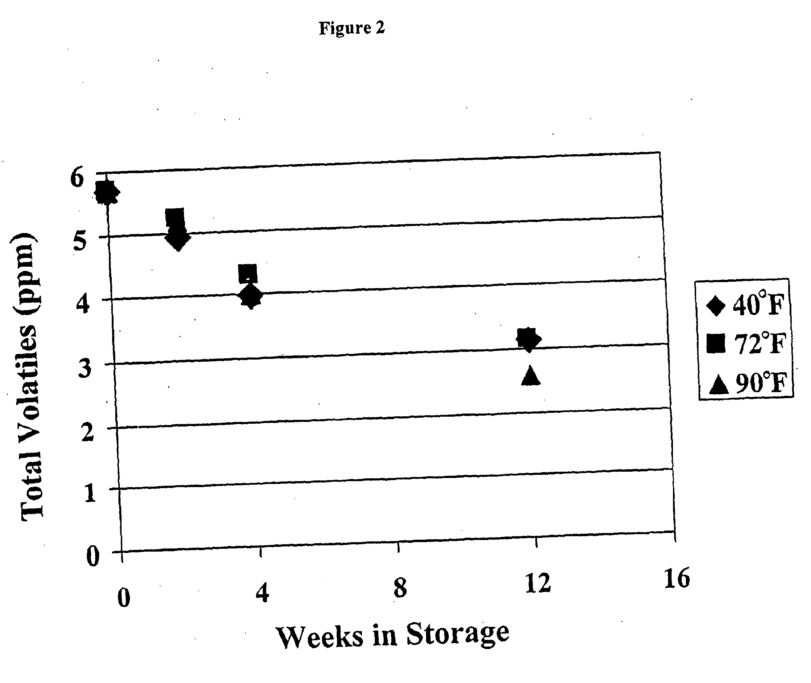

The stability of flavor compounds over time when mixed with liquid sucrose is demonstrated in Figure 2. The ◆s, ■s and ▲s represent the total amount of volatile flavor compounds (ppm) present in a 55.4 brix sucrose solution at 4.4°C, 22.2°C, and 32.2°C (40°F, 72°F and 90°F), respectively, at 0, 2, 4 and 12 weeks. Changes in aroma compounds are much slower in sucrose, as compared with changes when stored with concentrated tea solids, thus delivering a product system with significantly enhanced shelf life.

## Claims

1. A method of delivering fresh brewed tea taste to an on-premise iced tea beverage at a point of dispense comprising the steps of:
(a) providing tea flavor compounds in an amount sufficient to deliver fresh brewed tea taste separate from tea solids prior to the time of dispense; and
(b) mixing the tea flavor compounds with the tea solids at the time of dispense,
**characterised in that** the tea flavour compounds are provided in an amount of 0.01 to 12% by weight of finished iced tea beverage.

2. A method as claimed in claim 1, **characterised in that** the tea flavor compounds comprise tea flavor, tea aroma or a combination thereof.

3. A method as claimed in claim 1 or claim 2, **characterised in that** the tea flavor compounds are provided in an amount of 0.02 to 5% by weight of finished iced tea beverage.

4. A method as claimed in claim 3, **characterised in that** the tea flavour compounds are provided in an amount of 0.03 to 2% by weight of finished iced tea beverage.

5. A method as claimed in any preceding claim, **characterised in that** the tea flavor compounds are provided in an amount from 1 to 150% of an amount of tea solids in a finished iced tea beverage, preferably 5 to 90% of an amount of tea solids in a finished iced tea beverage, and more preferably 15 to 50% of an amount of tea solids in a finished iced tea beverage.

6. A method as claimed in any preceding claim, **characterised in that** the tea flavor compounds are provided together with a sweetener, the sweetener preferably being selected from the group consisting of sucrose, high fructose corn syrup, corn syrup, honey, molasses and combinations thereof.

7. A method as claimed in claim 6, **characterised in that** the sweetener is acidified with an acidulant preferably selected from the group consisting of phosphoric acid, citric acid, lactic acid, fumaric acid and combinations thereof, and preserved with a preservative preferably selected from the group consisting of benzoate, sorbate and combinations thereof.

## Patentansprüche

1. Verfahren, mit dem einem "on-premise"-Eisteegetränk an einer Ausgabestelle ein Geschmack von frisch aufgebrühtem Tee verliehen wird, umfassend die Schritte:
(a) Bereitstellen von Teegeschmack-Verbindungen in einer Menge, die ausreichend ist, um vor der Ausgabe und getrennt von Teefeststoffen Geschmack von frisch aufgebrühtem Tee zu verleihen; und
(b) Mischen der Teegeschmack-Verbindungen mit den Teefeststoffen zum Zeitpunkt der Ausgabe,
**dadurch gekennzeichnet, dass** die Teegeschmack-Verbindungen in einer Menge von 0,01 bis 12 Gew.-% des fertigen Eisteegetränks vorgesehen sind.

2. Verfahren nach Anspruch 1, **dadurch gekennzeichnet, dass** die Teegeschmack-Verbindungen Teegeschmack, Teearoma oder eine Kombination davon umfassen.

3. Verfahren nach Anspruch 1 oder 2, **dadurch gekennzeichnet, dass** die Teegeschmack-Verbindungen in einer Menge von 0,02 bis 5 Gew.-% des fertigen Eisteegetränks vorgesehen sind.

4. Verfahren nach Anspruch 3, **dadurch gekennzeichnet, dass** die Teegeschmack-Verbindungen in einer Menge von 0,03 bis 2 Gew.-% des fertigen Eisteegetränks vorgesehen sind.

5. Verfahren nach einem vorherigen Anspruch, **dadurch gekennzeichnet, dass** die Teegeschmack-Verbindungen in einer Menge von 1 bis 150 %, vorzugsweise von 5 bis 90 %, mehr bevorzugt von 15 bis 50 %, einer Menge an Teefeststoffen in einem fertigen Eisteegetränk vorhanden sind.

6. Verfahren nach einem vorherigen Anspruch, **dadurch gekennzeichnet, dass** die Teegeschmack-Verbindungen gemeinsam mit einem Süßungsmittel vorgesehen sind, wobei das Süßungsmittel vorzugsweise aus der Gruppe bestehend aus Sucrose, Maissirup mit hohem Fructosegehalt, Maissirup, Honig, Molassen und Kombinationen davon ausgewählt ist.

7. Verfahren nach Anspruch 6, **dadurch gekennzeichnet, dass** das Süßungsmittel mit einem ansäuernden Mittel angesäuert ist, das vorzugsweise aus der Gruppe bestehend aus Phosphorsäure, Zitronensäure, Milchsäure, Ameisensäure und Kombinationen davon ausgewählt und mit einem Konservierungsmittel konserviert ist, das vorzugsweise aus der Gruppe bestehend aus Benzoat, Sorbat und Kombinationen davon ausgewählt ist.

## Revendications

1. Procédé de distribution d'un arôme de thé fraîchement infusé dans une boisson au thé glacé sur site à un point de vente comprenant les étapes consistant à :
(a) fournir des composés d'arôme de thé dans une quantité suffisante pour fournir un arôme de thé fraîchement infusé, séparément des matières solides du thé, avant le moment de la distribution ; et
(b) mélanger les composés d'arôme de thé avec les matières solides du thé au moment de la distribution,
**caractérisé en ce que** les composés d'arôme de thé sont fournis dans une quantité de 0,01 à 12% en poids de la boisson de thé glacé finie.

2. Procédé selon la revendication 1, **caractérisé en ce que** les composés d'arôme de thé comprennent un arôme de thé, un parfum de thé ou une combinaison des deux.

3. Procédé selon la revendication 1 ou la revendication 2, **caractérisé en ce que** les composés d'arôme de thé sont fournis dans une quantité de 0,02 à 5% en poids de la boisson de thé glacé finie.

4. Procédé selon la revendication 3, **caractérisé en ce que** les composés d'arôme de thé sont fournis dans une quantité de 0,03 à 2% en poids de la boisson de thé glacé finie.

5. Procédé selon l'une quelconque des revendications précédentes, **caractérisé en ce que** les composés d'arôme de thé sont fournis dans une quantité de 1 à 150% d'une quantité de matières solides de thé dans une boisson de thé glacé finie, de préférence de 5 à 90% d'une quantité de matières solides de thé dans une boisson de thé glacé finie, et de manière davantage préférée de 15 à 50% d'une quantité de matières solides de thé dans une boisson de thé glacé finie.

6. Procédé selon l'une quelconque des revendications précédentes, **caractérisé en ce que** les composés d'arôme de thé sont fournis avec un édulcorant, l'édulcorant étant de préférence choisi dans le groupe constitué de saccharose, de sirop de maïs à haute teneur en fructose, de sirop de maïs, de miel, de mélasse et de combinaisons de ceux-ci.

7. Procédé selon la revendication 6, **caractérisé en ce que** l'édulcorant est acidifié avec un acidulant de préférence choisi dans le groupe constitué d'acide phosphorique, d'acide citrique, d'acide lactique, d'acide fumarique et de combinaisons de ceux-ci, et conservé avec un conservateur de préférence choisi dans le groupe constitué de benzoate, sorbate et de combinaisons de ceux-ci.
